# EUROPÄISCHE PATENTSCHRIFT

(11) **EP 3 865 398 B1**
(45) Veröffentlichungstag und Bekanntmachung des Hinweises auf die Patenterteilung: **25.10.2023**
(21) Anmeldenummer: 21156458.8
(22) Anmeldetag: 11.02.2021
(51) Int. Cl.: B64C 1/14

(54) **TÜRSYSTEM FÜR EIN LUFTFAHRZEUG UND LUFTFAHRZEUG**
AIRCRAFT AND DOOR SYSTEM FOR AN AIRCRAFT
SYSTÈME DE PORTE D'AVION ET AÉRONEF

(30) Priorität: 13.02.2020 DE 102020201779
(43) Veröffentlichungstag der Anmeldung: 18.08.2021
(73) Patentinhaber: Premium AEROTEC GmbH, 86179 Augsburg (DE)
(72) Erfinder: Haack, Cord, 86179 Augsburg (DE); Paul, Carsten, 86179 Augsburg (DE); Hörger, Bernhard, 86179 Augsburg (DE)
(74) Vertreter: LKGLOBAL Lorenz & Kopf Patentanwalt Attorney at Law PartG mbB

(56) Entgegenhaltungen:
- WO-A1-98/25817
- DE-A1-102009 056 533
- US-A1- 2010 276 543
- US-A1- 2018 304 982

## Beschreibung

Die vorliegende Erfindung betrifft ein Türsystem für ein Luftfahrzeug und ein Luftfahrzeug, insbesondere ein Flugzeug, z.B. ein Passagierflugzeug.

Im Rumpf eines Luftfahrzeugs sind Türen für Passagiere und Bordpersonal sowie zum Be- und Entladen des Luftfahrzeugs vorgesehen. Die Türen sind üblicherweise in einem Rahmen gelagert, welcher mit der Rumpfstruktur verbunden ist bzw. einen Teil der Rumpfstruktur bildet. In einem geschlossenen Zustand der Türe ist diese in einer durch den Rahmen definierten Türöffnung angeordnet. An einem Umfangsrand der Türe sind typischerweise Anschläge oder Stopelemente vorgesehen, welche im geschlossenen Zustand der Türe an am Rahmen vorgesehenen Anschlägen oder Stopelementen anliegen. Mit zunehmender Flughöhe sinkt der Umgebungsdruck, wodurch im Inneren des Rumpfes in der Regel ein deutlich größerer Druck vorliegt als in der Umgebung des Luftfahrzeugs. Die in Folge der Druckdifferenz auf die Türe wirkenden Kräfte werden über die Anschläge der Türe und die Anschläge des Rahmens von der Türe auf den Rahmen übertragen.

Typischerweise ist die Türe im geschlossenen Zustand durch die Anschläge schwimmend in der Türöffnung gelagert, so dass lediglich in einer sich senkrecht zur Türfläche erstreckenden radialen Richtung Kräfte von der Türe auf den Türrahmen übertragen werden können, nicht aber in der Türfläche in einer Längsrichtung oder einer Umfangsrichtung. Diese Lasten werden typischerweise mittels massiver Versteifungsstrukturen über den Türrahmen um die Türöffnung herumgeführt.

US 2018/304982 A1 betrifft laut der bei Espacenet verfügbaren Zusammenfassung eine Plug-Door-Anordnung für ein unter Druck stehendes Flugzeug. Die Türanordnung umfasst eine Einfassung und eine Tür und Verbindungsanordnungen entlang der Kanten, die dazu dienen, Spannungen in der Ebene direkt über die Rumpföffnung über die Tür zu übertragen, sowie Anschläge, die auf radiale Belastungen reagieren, die durch Kabinendruck erzeugt werden. Die Türanordnung vermeidet die Notwendigkeit eines separaten Rahmens, um Spannungen um den Umfang der Rumpföffnung herum zu übertragen. Um zusätzlich erforderliche Versteifungen des Türrahmens zu reduzieren, wird in der US 2018/0304982 A1 ein Türsystem mit einer Türe und einem Türrahmen beschrieben, wobei die Türe und der Türrahmen in einem geschlossenen Zustand der Türe über Verbindungseinrichtungen in Form von Stecker-Buchse-Verbindern aneinander gekoppelt sind, so dass über die Verbindungseinrichtungen Lasten in Längsrichtung vom Rahmen in die Türe eingeleitet werden können.

DE 10 2009 056 533 A1 betrifft laut Zusammenfassung ein Flugzeugrumpfbauteil mit einer Außenwand, mit Verstärkungselementen und mit einer Öffnung in der Außenwand. Das Flugzeugrumpfbauteil ist als integrales Faserverbundelement ausgebildet, bei dem angrenzend an die Öffnung und die Außenwand ein Verstärkungsfasergelege zur Bildung der Verstärkungselemente angeordnet ist, wobei das Verstärkungsfasergelege integral mit der Außenwand verbunden ist, und wobei die Faserausrichtung des Verstärkungsfasergeleges zur Umleitung von Lasten um die Öffnung herum und zur Ableitung von an Lasteinleitpunkten an der Öffnung einwirkenden Lasten in die Seitenflächenbereiche des Flugzeugrumpfbauteils angepasst ist.

WO 98/25817 betrifft laut der bei Espacenet verfügbaren Zusammenfassung eine Rumpftür für einen druckbeaufschlagten Flugzeugrumpf, bei der die durch den Kabinendruck verursachten Ringzugspannungen durch die Tür und nicht um die Tür herum geführt werden. Stationäre ineinandergreifende Formteile in der Tür und Rumpftür übertragen Lasten durch den Tür-Rumpf-Übergang. Die Verriegelungsabschnitte der Formteile haben einen geneigten Eingriffsabschnitt mit einem Winkel, so dass die nach innen gerichtete Kraftkomponente der Spannung aufgrund einer Druckdifferenz geringer ist als die nach außen gerichtete Kraft vom Kabinendruck auf die Tür.

Es ist Aufgabe der vorliegenden Erfindung, verbesserte Lösungen für Türanordnungen von Luftfahrzeugen bereitzustellen.

Diese Aufgabe wird durch den Gegenstand des unabhängigen Anspruchs gelöst.

Nach einem ersten Aspekt der Erfindung ist ein Türsystem für ein Luftfahrzeug vorgesehen. Das Türsystem umfasst einen eine Türöffnung definierenden Türrahmen mit einer sich in einer Umfangsrichtung erstreckenden ersten Umfangsstrebe und einer sich in der Umfangsrichtung erstreckenden zweiten Umfangsstrebe, welche in Bezug auf eine quer zu der Umfangsrichtung verlaufende Längsrichtung beabstandet zu der ersten Umfangsstrebe angeordnet ist, zumindest einen an der ersten Umfangsstrebe befestigten ersten Rahmenstopper und zumindest einen an der zweiten Umfangsstrebe befestigtem zweiten Rahmenstopper, wobei die Rahmenstopper jeweils einen in die Türöffnung hineinragenden ersten Anlageabschnitt mit einer ersten Verzahnung aufweisen, wobei die ersten Verzahnungen jeweils an einer Innenfläche des ersten Anlageabschnitts ausgebildet sind, welche sich senkrecht zu einer quer zu der Längsrichtung und quer zu der Umfangsrichtung verlaufenden radialen Richtung erstreckt. Das Türsystem umfasst ferner eine relativ zu dem Türrahmen bewegbar gelagerten Türe, welche in einem geschlossenen Zustand in der Türöffnung angeordnet ist und eine der Anzahl der Rahmenstopper entsprechende Anzahl von an gegenüberliegenden Seiten der Türe angeordneten und mit der Türe verbundenen Türstoppern, welche jeweils einen zweiten Anlageabschnitt aufweisen, wobei der zweite Anlageabschnitt eine komplementär zu der ersten Verzahnung ausgebildete zweite Verzahnung aufweist, und wobei die erste Verzahnung jeweils eines Rahmenstoppers und die zweite Verzahnung jeweils eines Türstoppers im geschlossenen Zustand der Türe ineinander eingreifen.

Nach einem zweiten Aspekt der Erfindung ist ein Luftfahrzeug vorgesehen. Das Luftfahrzeug weist einen sich entlang einer Rumpflängsachse erstreckenden Rumpf, welcher einen Innenraum definiert, und ein Türsystem nach dem ersten Aspekt der Erfindung auf. Der Türrahmen des Türsystems ist derart mit dem Rumpf verbunden ist, dass sich die Längsrichtung entlang und die radiale Richtung senkrecht zu der Rumpflängsachse erstreckt.

Eine der Erfindung zugrundeliegende Idee besteht darin, die Türe eines Luftfahrzeugs als lasttragende Struktur zu realisieren, so dass in einer Umfangsrichtung und in einer Längsrichtung des Rumpfs bzw. auf den Türrahmen wirkende Kräfte durch den Türrahmen und die Türe hindurch geleitet werden können. Zur Übertragung solcher Lasten zwischen dem Türrahmen und der Türe sind an dem Türrahmen Rahmenstopper oder rahmenseitige Anschläge und an der Türe Türstopper oder türseitige Anschläge vorgesehen, welche in einem geschlossenen Zustand der Türe aneinander anliegen und jeweils eine Verzahnung aufweisen. Die Verzahnung der rahmenseitigen Anschläge ist an einer Innenfläche des jeweiligen Anschlags ausgebildet, welche sich senkrecht zu einer quer zur Rumpflängsachse bzw. zur Längsrichtung verlaufenden radialen Richtung erstreckt bzw. deren Oberflächennormale in die radiale Richtung weist. Die Innenfläche ist dem Innenraum des Rumpfs zugewandt. Im geschlossenen Zustand der Türe, in welchem die Türe in einer durch den Rahmen definierten Türöffnung angeordnet ist und diese verschließt, greift die Verzahnung jeweils eines türseitigen Anschlags in die Verzahnung jeweils eines rahmenseitigen Anschlags ein, wodurch in Bezug auf die Längsrichtung und die Umfangsrichtung eine formschlüssige Verbindung zwischen den Anschlägen ausgebildet wird. Durch die Ausrichtung der Innenflächen der Rahmenstopper werden die Türstopper der Türe durch die mit zunehmender Flughöhe zunehmende Druckdifferenz zwischen dem Innenraum des Rumpfs und der Umgebung in radialer Richtung gegen die Verzahnung der Rahmenstopper gedrückt.

Einer der Vorteile der Erfindung liegt darin, dass die türseitigen und die rahmenseitigen Anschläge bzw. die Türstopper und die Rahmenstopper jeweils komplementäre Verzahnungen aufweisen, welche im geschlossenen Zustand der Türe ineinander eingreifen. Da eine Verzahnung eine Vielzahl an einzelnen Zahnelementen umfasst, kann die Belastung jedes einzelnen Zahnelements relativ klein gehalten werden, was bei gegebener mechanischer Last eine gewichtsreduzierte Auslegung ermöglicht. Ferner wird dadurch innerhalb des jeweiligen Türstoppers und innerhalb des jeweiligen Rahmenstoppers eine Redundanz der lastübertragenden Elemente realisiert, so dass die Ausfallwahrscheinlichkeit der Stopper verringert wird. Folglich kann auch die Anzahl der Stopper bzw. Anschläge verringert werden, wodurch sich weiter Gewicht reduzieren lässt.

Vorteilhafte Ausgestaltungen und Weiterbildungen ergeben sich aus den auf die unabhängigen Ansprüche rückbezogenen Unteransprüchen in Verbindung mit der Beschreibung.

Gemäß manchen Ausführungsformen des Türsystems kann vorgesehen sein, dass der erste und der zweite Rahmenstopper in Bezug auf die Umfangsrichtung auf demselben Niveau oder derselben Höhe angeordnet sind. Dementsprechend kann auch die Türe an einer sich im geschlossenen Zustand der Türe der ersten Umfangsstrebe zugewandt gelegenen ersten Vertikalseite einen ersten Türstopper zum Eingriff mit dem ersten Rahmenstopper und an einer sich im geschlossenen Zustand der Türe der zweiten Umfangsstrebe zugewandt gelegenen zweiten Vertikalseite einen zweiten Türstopper zum Eingriff mit dem zweiten Rahmenstopper aufweisen. Damit kann auf kürzestem Wege eine Lastdurchleitung in Längsrichtung erfolgen, wodurch die Belastung der Türe vorteilhaft verringert wird.

Gemäß manchen Ausführungsformen können jeweils zwei obere erste Rahmenstopper in einem in Bezug auf die Umfangsrichtung oberen Bereich der ersten Umfangsstrebe angeordnet und jeweils zwei obere zweite Rahmenstopper in einem in Bezug auf die Umfangsrichtung oberen Bereich der zweiten Umfangsstrebe angeordnet sein. Die oberen Rahmenstopper sind jeweils in der Umfangsrichtung zueinander beabstandet, wobei die jeweiligen Rahmenstopper der Umfangsstreben einander gegenüberliegen, z.B. auf demselben Niveau in Bezug auf die Umfangsrichtung.

Gemäß manchen Ausführungsformen können jeweils zwei untere erste Rahmenstopper in einem in Bezug auf die Umfangsrichtung unteren Bereich der ersten Umfangsstrebe angeordnet und jeweils zwei untere zweite Rahmenstopper in einem in Bezug auf die Umfangsrichtung unteren Bereich der zweiten Umfangsstrebe angeordnet sein. Die unteren Rahmenstopper sind jeweils in der Umfangsrichtung zueinander und gegebenenfalls zu den oberen Rahmenstoppern beabstandet angeordnet. Die jeweiligen unteren Rahmenstopper der Umfangsstreben liegen einander gegenüber, z.B. auf demselben Niveau in Bezug auf die Umfangsrichtung. Optional können somit an der ersten Umfangsstrebe ein Paar obere und ein Paar untere erste Rahmenstopper und an der zweiten Umfangsstrebe ein Paar obere und ein Paar untere zweite Rahmenstopper vorgesehen sein. Dadurch wird eine gleichmäßige und über die Türfläche verteilte Lasteinleitung erzielt.

Ganz allgemein können an den Vertikalseiten der Türe jeweils Türstopper vorgesehen sein, welche im geschlossenen Zustand der Türe in Bezug auf die Umfangsrichtung an zu der Position der Rahmenstopper korrespondierenden Positionen angeordnet sind.

Gemäß manchen Ausführungsformen kann vorgesehen sein, dass der Türrahmen eine sich zwischen der ersten und der zweiten Umfangsstrebe in der Längsrichtung erstreckende Längsstrebe und einen Versteifungsträger aufweist, welcher sich zumindest abschnittsweise bogenförmig zwischen einer ersten Verbindungsstelle, an welcher die Längsstrebe mit der ersten Umfangsstrebe verbunden ist, und einer zweiten Verbindungsstelle erstreckt, an welcher die Längsstrebe mit der zweiten Umfangsstrebe verbunden ist. Der Versteifungsträger erstreckt sich somit außerhalb der Türöffnung ganz oder teilweise bogenförmig zwischen dem ersten und dem zweiten Längsträger. Dadurch wird ein zusätzlicher Pfad zur Übertragung von in der Längsrichtung und in der Umfangsrichtung wirkender Lasten bereitgestellt und damit die Tür zusätzlich entlastet. Ferner werden die Steifigkeit des Rahmens und damit die Formstabilität der Türöffnung selbst nach unerwartet hohen Belastungen verbessert.

Gemäß einigen Ausführungsformen kann sich der Versteifungsträger jeweils über die erste und die zweite Verbindungsstelle hinaus erstrecken und mittels Längsverbindungsstücken mit der ersten und der zweiten Umfangsstrebe verbunden sein. Der Verbindungsträger kann demnach zusätzliche, sich teilweise entlang der Umfangsstrebe erstreckende Abschnitte aufweisen, welche mit den Umfangsstreben durch in Längsrichtung verlaufende Verbindungsstücke verbunden sind. Dadurch wird die Steifigkeit des Rahmens weiter verbessert.

Gemäß weiteren Ausführungsformen kann die Türe eine Innenversteifungsstruktur aufweisen, welche zumindest eine Innenlängsstrebe umfasst, die sich zwischen den auf gegenüberliegenden Seiten der Türe angeordneten Türstoppern erstreckt. Die zumindest eine Innenlängsstrebe erstreckt sich im geschlossenen Zustand der Türe somit in der Längsrichtung und erleichtert die Lastdurchleitung in der Längsrichtung. Gleichzeitig wird die mechanische Steifigkeit der Türe entsprechend verbessert.

Gemäß manchen Ausführungsformen kann vorgesehen sein, dass jeweils zwei erste Türstopper an einer ersten Vertikalseite der Türe angeordnet sind, vorzugsweise in einem in Bezug auf die Umfangsrichtung oberen Bereich und/oder im unteren Bereich der ersten Vertikalseite, wobei jeweils zwei zweite Türstopper auf einer zweiten Vertikalseite der Türe angeordnet sind, vorzugsweise in einem in Bezug auf die Umfangsrichtung oberen Bereich und/oder unteren Bereich der zweiten Vertikalseite, wobei die Innenversteifungsstruktur eine sich zwischen zwei einander gegenüberliegenden ersten und zweiten Türstoppern erstreckende erste Innenlängsstrebe und eine sich zwischen den zwei weiteren einander gegenüberliegenden ersten und zweiten Türstoppern erstreckende zweite Innenlängsstrebe aufweist, und wobei die Innenversteifungsstruktur eine erste Diagonalversteifungsstrebe, die sich diagonal zwischen einem an dem ersten Türstopper gelegenen ersten Endbereich der ersten Innenlängsstrebe und der zweiten Innenlängsstrebe erstreckt, und eine zweite Diagonalversteifungsstrebe aufweist, die sich diagonal zwischen einem an dem zweiten Türstopper gelegenen zweiten Endbereich der ersten Innenlängsstrebe und der zweiten Innenlängsstrebe erstreckt. Beispielsweise kann ein Paar an oberen, ersten Türstoppern und ein Paar an oberen zweiten Türstoppern vorgesehen sein, wobei sich zwischen jeweils zwei gegenüberliegenden ersten und zweiten Türstoppern jeweils eine Innenlängsstrebe erstreckt. Die Diagonalversteifungsstreben verlaufen jeweils von einem Ende einer der Innenlängstrebe zu der anderen Innenlängsstrebe, z.B. zu einem nahe der Mitte der jeweils anderen Innenlängsstrebe gelegenen Anbindungsbereich, so dass die erste und die zweite Diagonalversteifungsstrebe gemeinsam mit den Innenlängsstreben im Wesentlichen ein Trapez und zwei Dreiecke umgrenzen. Vorzugweise erstrecken sich die Diagonalversteifungsstreben von einem in Bezug auf die Umfangsrichtung obersten oder untersten Türstopper aus. Durch die beschriebenen Gestaltungen der Innenversteifungsstruktur wird das durchleiten von Lasten in der Umfangsrichtung weiter erleichtert.

Gemäß manchen Ausführungsformen kann vorgesehen sein, dass die erste und die zweite Diagonalversteifungsstrebe jeweils bogenförmig verlaufen. Damit wird ein platzsparender Verlauf der Diagonalversteifungsstreben realisiert, wodurch zusätzliche Bauelemente der Türe, wie Hebel, Fenster oder dergleichen auf einfache Weise untergebracht werden können.

Gemäß weiteren Ausführungsformen können sich die erste und die zweite Diagonalversteifungsstrebe jeweils über die zweite Innenlängsstrebe hinaus erstrecken und an einer zentralen Türumfangsstrebe enden. Die zentrale Türumfangsstrebe erstreckt sich im geschlossenen Zustand der Türe insbesondere entlang der Umfangsrichtung, wodurch die Übertragung von Lasten in Umfangsrichtung weiter erleichtert wird. Optional können jeweils ein oberes und ein unteres Paar erste Türstopper an der ersten Vertikalseite der Türe und ein oberes und ein unteres Paar zweite Türstopper an der zweiten Vertikalseite der Türe vorgesehen sein, wobei zwischen jeweils einander gegenüberliegenden, vorzugsweise auf einem Niveau gegenüberliegenden ersten und den zweiten Türstoppern jeweils eine Innenlängsstrebe verläuft. Optional verläuft die Türumfangsstrebe zwischen einer Innenlängsstrebe, welche zwischen die in Bezug auf die Umfangsrichtung unteren der oberen ersten und zweiten Türstopper verläuft, und einer Innenlängsstrebe, welche zwischen die in Bezug auf die Umfangsrichtung oberen der unteren ersten und zweiten Türstopper verläuft. Weiter optional sind obere Diagonalversteifungsstreben vorgesehen, welche sich von den oberen der oberen ersten und zweiten Türstopper aus erstrecken, und untere Diagonalversteifungsstreben, welche sich von den unteren der unteren ersten und zweiten Türstopper aus erstrecken.

Gemäß manchen Ausführungsformen kann vorgesehen sein, dass die ersten Anlageabschnitte der Rahmenstopper eine erste Eingriffsstruktur aufweisen, welche eine größere Eingriffstiefe als die jeweilige erste Verzahnung aufweist, und wobei die zweiten Anlageabschnitte der Türstopper eine komplementär zu der ersten Eingriffsstruktur ausgebildete zweite Eingriffsstruktur aufweisen, welche eine größere Eingriffstiefe als die jeweilige erste Verzahnung aufweist. Die erste Eingriffsstruktur kann insbesondere konzentrisch zu der jeweiligen ersten Verzahnung angeordnet sein. Ebenso kann die zweite Eingriffsstruktur konzentrisch zu der jeweiligen zweiten Verzahnung angeordnet sein. Die Eingriffsstrukturen weisen jeweils eine Eingriffstiefe auf, die größer ist als die Eingriffstiefe der jeweils zugehörigen Verzahnung. Folglich ragt die jeweilige Eingriffsstruktur über die jeweilige Verzahnung hinaus bzw. weist einen zurückgesetzten Boden auf. Durch die komplementär ausgebildeten ersten und zweiten Eingriffsstrukturen wird somit ein zusätzliches lastübertragendes Element bereitgestellt, welches auch bei nur teilweisem Eingriff der ersten und der zweiten Verzahnung ineinander noch mit der jeweils anderen Eingriffsstruktur zuverlässig in Eingriff steht. Damit wird die Zuverlässigkeit des Systems weiter verbessert. Weiterhin wird damit eine Zentrierung bzw. eine gewünschte Ausrichtung von erster und zweiter Verzahnung zueinander erleichtert.

Die erste Eingriffsstruktur kann insbesondere als Vertiefung, vorzugsweise als konische Vertiefung, und die zweite Eingriffsstruktur als Vorsprung, vorzugsweise als konischer Vorsprung ausgebildet sein. Alternativ kann die erste Eingriffsstruktur als Vorsprung, vorzugsweise als konischer Vorsprung, und die zweite Eingriffsstruktur als Vertiefung, vorzugsweise als konische Vertiefung ausgebildet sein. Damit wird eine Zentrierung bzw. eine gewünschte Ausrichtung von erster und zweiter Verzahnung zueinander weiter erleichtert.

Gemäß manchen Ausführungsformen kann die erste Verzahnung und/oder die zweite Verzahnung eine Vielzahl separater, vorzugweise tetraederförmiger Vorsprünge aufweisen. Die Zahnelemente der Verzahnung können somit als erhabene, separate Vorsprünge ausgebildet sein, welche insbesondere die Form eines Tetraeders oder Tetraederstumpfs aufweisen können. Dies bietet den Vorteil, dass eine einfache und mechanisch stabile Form von Zahnelementen bereitgestellt wird.

Gemäß manchen Ausführungsformen des Luftfahrzeugs kann vorgesehen sein, dass das Türsystem einen Zugang zu einem im Innenraum des Rumpfs gelegenen Passagierbereich ermöglicht. Die Türe bildet somit vorzugsweise eine Passagiertüre.

Allgemein sind die im Zusammenhang mit dem Türsystem offenbarten Merkmale und Vorteil auch für das Luftfahrzeug offenbart und umgekehrt.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Im Folgenden wird die Erfindung unter Bezugnahme auf die Figuren der Zeichnungen erläutert. Von den Figuren zeigen:
- Fig. 1: eine schematische Ansicht eines Luftfahrzeugs gemäß Ausführungsbeispiel der vorliegenden Erfindung;
- Fig. 2: eine schematische Ansicht eines Türsystems für ein Luftfahrzeug gemäß einem Ausführungsbeispiel der Erfindung, wobei das Türsystem in einem in das Luftfahrzeug eingebauten Zustand und eine Tür des Türsystems in einem geschlossenen Zustand dargestellt ist;
- Fig. 3: eine Tür eines Türsystems gemäß einem Ausführungsbeispiel der Erfindung;
- Fig. 4: eine Detailansicht eines rahmenseitigen Rahmenstoppers und eines türseitigen Türstoppers in einem Türsystem gemäß einem Ausführungsbeispiel der, wobei die Türe in einem geschlossenen Zustand dargestellt ist;
- Fig. 5: eine Detailansicht der in Fig. 4 gezeigten Rahmenstopper und Türstopper, in einem teilweise voneinander gelösten Zustand; und
- Fig. 6: eine schematische Detailansicht einer Verzahnung eines Rahmenstopper oder eines Türstoppers eines Türsystems gemäß einem Ausführungsbeispiel der Erfindung.

In den Figuren bezeichnen dieselben Bezugszeichen gleiche oder funktionsgleiche Komponenten, soweit nichts Gegenteiliges angegeben ist.

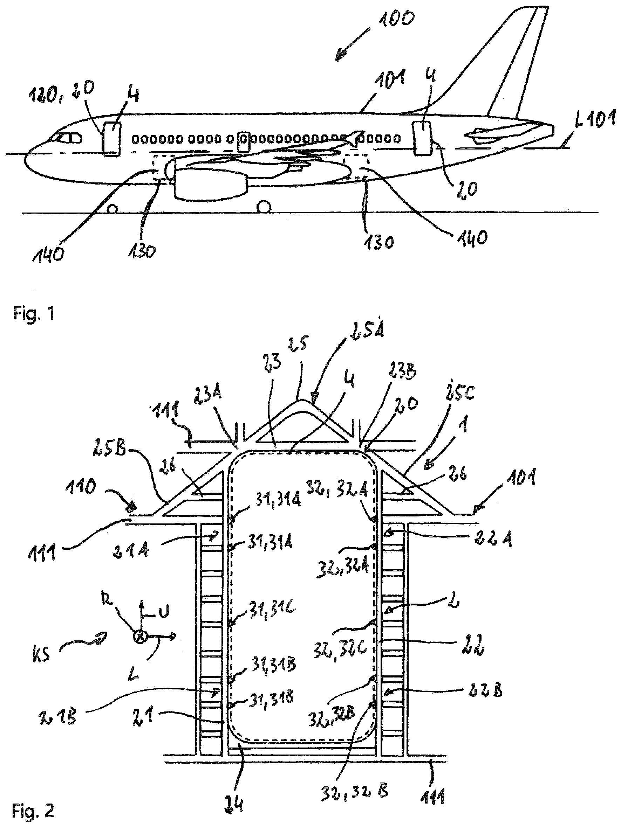

Fig. 1 zeigt rein beispielhaft ein Luftfahrzeug 100 in Form eines Flugzeugs, welches einen sich entlang einer Rumpflängsachse L101 erstreckenden Rumpf 101 aufweist. Der Rumpf 101 definiert einen Innenraum, in welchem z.B. eine Passagierkabine, ein Cockpit und ein Frachtraum untergebracht sein können. Wie in Fig. 1 schematisch dargestellt, weist der Rumpf 101 eine Türöffnung 120 auf, welche durch eine Türe 4 verschließbar ist und einen Zutritt zum Innenraum, insbesondere zum Passagierbereich ermöglicht. Die Türe 4 bildet somit eine Passagiertüre. Optional kann der Rumpf auch Frachtöffnungen 130 aufweisen, welche durch Frachttore 140 verschließbar sind und einen Zugang in den Frachtraum ermöglichen. In dem in Fig. 1 beispielhaft gezeigten Luftfahrzeug 100 sind zwei Passagiertüren 4 vorgesehen, wobei eine Türe 4 in einem vorderen Endbereich des Rumpfs 101 und die andere Türe 4 in einem hinteren Endbereich des Rumpfs 101 angeordnet ist. Selbstverständlich kann auch lediglich eine Türe 4 vorgesehen sein oder es können zusätzliche, zwischen dem vorderen und dem hinteren Endbereich des Rumpfs 101 angeordnete Türen 4 vorgesehen sein.

Das in Fig. 1 beispielhaft gezeigte Luftfahrzeug 100 kann ein Türsystem 1 aufweisen, welches schematisch in Fig. 2 dargestellt ist. Das Türsystem 1 kann insbesondere einen Türrahmen 2, eine Türe 4, einen oder mehrere rahmenseitige Rahmenstopper 31, 32 und einen oder mehrere türseitige Türstopper 51, 52 (in Fig. 2 nicht dargestellt) aufweisen.

Der Türrahmen 2 kann insbesondere mit einer Trägerstruktur 110 des Rumpfs 101 des Luftfahrzeugs 100 verbunden sein oder einen Teil dieser Trägerstruktur 110 bilden. Die Trägerstruktur 110 kann insbesondere mehrere sich in einer Längsrichtung L, welche entlang der Rumpflängsachse L101 verläuft, erstreckende Stringer 111 aufweisen, wobei die Stringer 111 entlang einer Umfangsrichtung U zueinander beabstandet angeordnet sind. Wie in Fig. 2 beispielhaft dargestellt, kann der Türrahmen 2 eine sich in der Umfangsrichtung U erstreckende erste Umfangsstrebe 21 und eine sich in der Umfangsrichtung U erstreckende zweite Umfangsstrebe 22 aufweisen, welche in Bezug auf die Längsrichtung L beabstandet zu der ersten Umfangsstrebe 21 angeordnet ist. Optional kann eine sich zwischen einem in Bezug auf die Umfangsrichtung U oberen Bereich 21A der ersten Umfangsstrebe 21 und einem in Bezug auf die Umfangsrichtung U oberen Bereich 22A der zweiten Umfangsstrebe 22 erstreckende obere Längsstrebe 23 vorgesehen sein, welche beispielsweise durch einen Stringer 111 gebildet sein kann, wie dies in Fig. 2 beispielhaft gezeigt ist. Optional kann auch eine sich zwischen einem in Bezug auf die Umfangsrichtung U unteren Bereich 21B der ersten Umfangsstrebe 21 und einem in Bezug auf die Umfangsrichtung U unteren Bereich 22B der zweiten Umfangsstrebe 22 erstreckende untere Längsstrebe 24 vorgesehen sein. Die untere Längsstrebe 24 ist in Fig. 2 beispielhaft als selbständige Strebe dargestellt, kann jedoch auch durch einen Stringer 111 gebildet sein. Die Umfangsstreben 21, 22 begrenzen die Türöffnung 20 in Bezug auf die Längsrichtung L. Die optionalen Längsstreben 23, 24 begrenzen die Türöffnung 20 in Bezug auf die Umfangsrichtung U.

Wie in Fig. 2 weiterhin gezeigt ist, kann der Türrahmen 2 zusätzlich einen optionalen Versteifungsträger 25 aufweisen. Wie in Fig. 2 beispielhaft dargestellt, kann der Versteifungsträger 25 einen im Wesentlichen bogenförmigen oder gewinkelten Abschnitt 25A aufweisen. Der gewinkelte Abschnitt 25A des Versteifungsträgers 25 kann sich in Bezug auf die Umfangsrichtung U insbesondere außerhalb der Türöffnung 20 bzw. oberhalb der optionalen Längsstrebe 23 zwischen den Umfangsstreben 21, 22 erstrecken. Wie in Fig. 2 erkennbar, kann sich der gewinkelte Abschnitt 25A, welcher allgemein zumindest abschnittsweise bogenförmig verläuft, insbesondere zwischen einer ersten Verbindungsstelle 23A, an welcher die Längsstrebe 23 mit der ersten Umfangsstrebe 21 verbunden ist, und einer zweiten Verbindungsstelle 23B erstrecken, an welcher die Längsstrebe 23 mit der zweiten Umfangsstrebe 22 verbunden ist. Wie in Fig. 2 weiterhin beispielhaft gezeigt ist, kann sich der Versteifungsträger 25 auch über die Verbindungsstellen 23A, 23B hinaus erstrecken, z.B. mit jeweiligen Diagonalabschnitten 25B, 25C. Die Diagonalabschnitte 25B, 25C können insbesondere als linear verlaufende Abschnitte realisiert sein, welche sich gewinkelt oder schräg relativ zu den Umfangsträgern 21, 22 erstrecken. Wie in Fig. 2 beispielhaft dargestellt, kann ein erster Diagonalabschnitt 25B in Bezug auf die Längsrichtung L seitlich des ersten Umfangsträgers 21 verlaufen und über einen oder mehrere Längsverbindungsstücke 26 mit dem ersten Umfangsträger 21 verbunden sein. In gleicher Weise kann ein zweiter Diagonalabschnitt 25C in Bezug auf die Längsrichtung L seitlich des zweiten Umfangsträgers 22 verlaufen und über einen oder mehrere Längsverbindungsstücke 26 mit dem zweiten Umfangsträger 22 verbunden sein. Insgesamt bildet der Versteifungsträger 25 eine Art Torbogen, welcher die Übertragung von mechanischen Lasten in der Längsrichtung L durch den Türrahmen 2 erleichtert.

Wie in Fig. 2 schematisch durch Dreiecke dargestellt ist, können an jeder der Umfangsstreben 21, 22 ein oder mehrere rahmenseitige Anschläge oder Rahmenstopper 31, 32 befestigt sein. In Fig. 2 ist rein beispielhaft gezeigt, dass an der ersten Umfangsstrebe 21 zwei obere erste Rahmenstopper 31A im oberen Bereich 21A der ersten Umfangsstrebe 21 und jeweils zwei untere erste Rahmenstopper 31B im unteren Bereich 21B der ersten Umfangsstrebe 21 angeordnet sein können. Zwischen den oberen ersten Rahmenstoppern 31A und den unteren ersten Rahmenstoppern 31B kann außerdem ein optionaler erster Mitten-Rahmenstopper 31C vorgesehen sein. An der zweiten Umfangsstrebe 22 können, wie in Fig. 2 beispielhaft gezeigt, jeweils zwei obere zweite Rahmenstopper 32A im oberen Bereich 22A der zweiten Umfangsstrebe 22 und jeweils zwei untere zweite Rahmenstopper 32B im unteren Bereich 22B der zweiten Umfangsstrebe 22 angeordnet sein. In ähnlicher Weise wie an der ersten Umfangsstrebe 21 kann auch an der zweiten Umfangsstrebe 22 ein optionaler zweiter Mitten-Rahmenstopper 32C vorgesehen sein. Selbstverständlich sind auch andere Anordnungen von einem oder mehreren ersten Rahmenstoppern 31 an der ersten Umfangsstrebe 21 und einem oder mehreren zweiten Rahmenstoppern 32 an der zweiten Umfangsstrebe 22 denkbar. Allgemein ist zumindest ein erster Rahmenstopper 31 an der ersten Umfangsstrebe 21 und zumindest ein zweiter Rahmenstopper 32 an der zweiten Umfangsstrebe 22 befestigt. Wie in Fig. 2 ferner erkennbar ist, können jeweils ein erster Rahmenstopper 31 und jeweils ein zweiter Rahmenstopper 32 in Bezug auf die Umfangsrichtung U auf demselben Niveau angeordnet sein, so dass sich diese in der Längsrichtung L direkt gegenüberliegen.

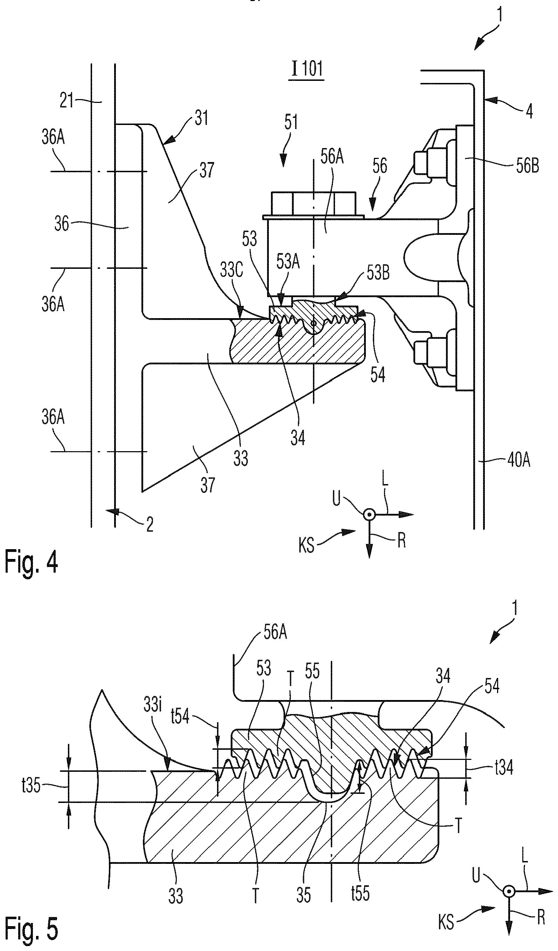

Die Rahmenstopper 31, 32 ragen in die Türöffnung 20 hinein bzw. stehen von dem jeweiligen Umfangsträger 21, 22 in der Längsrichtung L vor. Die Fign. 4 und 5 zeigen beispielhaft im Detail den Aufbau eines ersten Rahmenstoppers 31. Die zweiten Rahmenstopper 32 sind identisch aufgebaut, weshalb im Folgenden lediglich der Aufbau eines ersten Rahmenstoppers 31 erläutert wird. Wie in Fig. 4 beispielhaft dargestellt, kann ein Rahmenstopper 31 insbesondere einen Anlageabschnitt 33 und einen Befestigungsabschnitt 36 aufweisen. Der Befestigungsabschnitt 36 und der Anlageabschnitt 33 können jeweils plattenförmig gestaltet sein, wobei der Anlageabschnitt 33 sich quer zu dem Befestigungsabschnitt 36 erstreckt. Beispielsweise können Anlageabschnitt 33 und Befestigungsabschnitt 36 einen T-förmigen Querschnitt definieren, wie dies in Fig. 4 beispielhaft gezeigt ist. Optional können zusätzlich Versteifungsrippen 37 vorgesehen sein, welche sich zwischen dem Befestigungsabschnitt 36 und dem Anlageabschnitt 33 des Rahmenstoppers 31 erstrecken. Wie in Fig. 2 schematisch dargestellt, kann Befestigungsabschnitt 36 des Rahmenstoppers 31 an dem Umfangsträger 21 befestigt sein, z.B. über Verbindungseinrichtungen 36A wie Schrauben oder Nieten mit diesem verbunden sein.

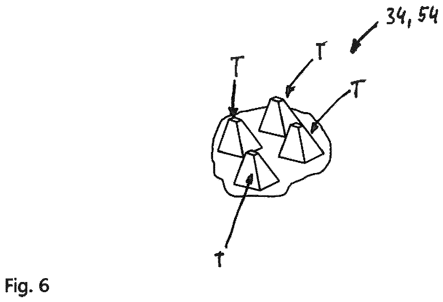

Wie in Fig. 4 weiterhin erkennbar ist, weist der in die Türöffnung 20 hineinragende Anlageabschnitt 33 an einer Innenfläche 33i eine erste Verzahnung 34 auf. Die Verzahnung 34 kann allgemein eine Vielzahl an Eingriffselementen oder Zahnelementen T aufweisen. Wie in Fig. 6 beispielhaft gezeigt, können die Zahnelemente T beispielsweise als eine Vielzahl separater Vorsprünge realisiert sein. In Fig. 6 ist beispielhaft gezeigt, dass die die Zahnelemente T bildenden Vorsprünge tetraederförmig bzw. in der Form von Tetraederstümpfen realisiert sein können.

Wie in den Fign. 4 und 5 weiterhin beispielhaft gezeigt ist, kann der erste Anlageabschnitt 33 des Rahmenstoppers 31 optional eine erste Eingriffsstruktur 35 aufweisen, insbesondere an der Innenfläche 33i. Die erste Eingriffsstruktur 35 kann beispielsweise wie in den Fign. 4 und 5 gezeigt als Vertiefung oder Ausnehmung realisiert sein, welche insbesondere konisch ausgebildet sein kann. Alternativ kann die erste Eingriffsstruktur 35 auch als Vorsprung realisiert sein. Die erste Eingriffsstruktur 35 kann beispielsweise konzentrisch bzw. Innerhalb der ersten Verzahnung 34 angeordnet sein, wie dies in den Fign. 4 und 5 rein beispielhaft gezeigt ist. Wie in Fig. 5 weiterhin dargestellt ist, kann die erste Eingriffsstruktur eine Eingriffstiefe t35 aufweisen, welche größer ist als eine Eingriffstiefe t34 der Verzahnung 34. Im Beispiel von Fig. 5 bedeutet dies, dass die Vertiefung tiefer in den Anlageabschnitt 33 eindringt, als eine Fläche zwischen den einzelnen Zahnelementen T der Verzahnung 34.

Wie in Fig. 4 durch das eingezeichnete Koordinatensystem KS erkennbar ist, ist der Rahmenstopper 31 derart an dem Umfangsträger 21 befestigt, dass die Innenfläche 33i des Anlageabschnitts 33 sich senkrecht zu einer quer zu der Längsrichtung L und quer zu der Umfangsrichtung U verlaufenden radialen Richtung R erstreckt. Die radiale Richtung R steht somit senkrecht auf die Rumpflängsachse L101. Eine Flächennormale auf die Innenfläche 33i weist damit in die radiale Richtung R. Insbesondere ist der Rahmenstopper so orientiert, dass die erste Verzahnung 34 bzw. die Innenfläche 33i dem durch den Rumpf 101 definierten Innenraum 1101 zugewandt ist, wie dies in Fig. 4 beispielhaft und rein schematisch dargestellt ist.

Die in Fig. 2 beispielhaft gezeigten optionale ersten und zweiten Mitten-Rahmenstopper 31C, 32C können in gleicher Weise realisiert sein, wie dies oben für die übrigen Rahmenstopper 31 beschrieben wurde. Optional kann auch vorgesehen sein, dass die Innenflächen 33i der Mitten-Rahmenstopper 31C, 32C eben ausgebildet ist, das heißt ohne erste Verzahnung 34 und optional auch ohne erste Eingriffsstruktur 35.

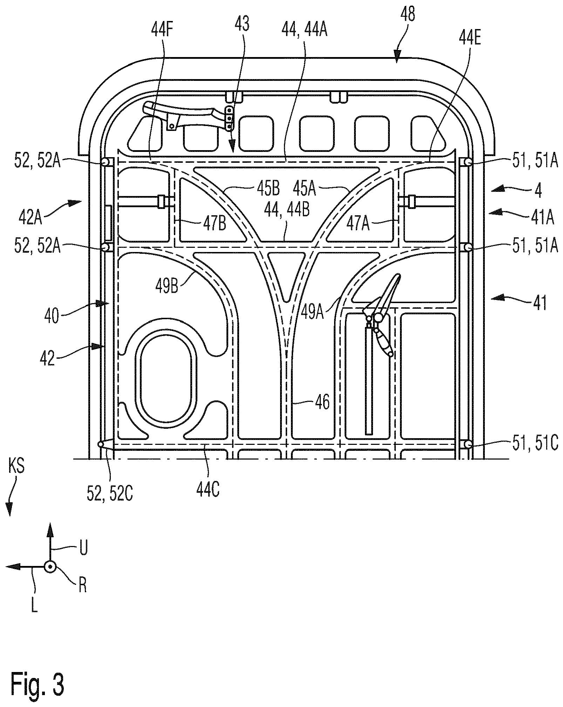

Fig. 3 zeigt beispielhaft und schematisch eine obere Hälfte einer Türe 4. In Fig. 2 ist die Türe 4 lediglich schematisch als gestrichelte Linie in einer geschlossenen Position dargestellt. Die Türe 4 weist allgemein eine flächige Erstreckung mit einer ersten Vertikalseite 41 und einer dieser gegenüberliegenden zweiten Vertikalseite 42 auf. Allgemein kann die Türe eine im Wesentlichen rechteckförmige Gestalt aufweisen. Wie in Fig. 3 außerdem schematisch dargestellt ist, kann die Türe 4 beispielsweise eine Innenrahmenstruktur 40 und eine daran befestigte Verkleidung 48 aufweisen. Die Türe 4 kann ferner eine optionale Innenversteifungsstruktur 42 aufweisen, welche nachfolgend noch im Detail beschrieben wird.

Die Türe 4 ist allgemein relativ zu dem Türrahmen 2 bewegbar gelagert, z.B. mittels eine Schwenkarms (nicht dargestellt). Beispielsweise kann die Türe 4 an der den Türrahmen 2 umgebenden Trägerstruktur 110 des Rumpfs 101 des Luftfahrzeugs 100 gelagert sein oder allgemein an einer in Bezug auf den Türrahmen 2 ortsfesten Lagerstruktur. Insbesondere kann die Türe 4 zwischen einer geschlossenen Position oder einem geschlossenen Zustand, in welchem die Türe 4 in der durch den Türrahmen 2 definierten Türöffnung 20 angeordnet ist, und einer geöffneten Position oder einem geöffneten Zustand bewegbar, in welchem die Türe 4 die Türöffnung 20 zumindest teilweise freigibt. In der geschlossenen Position der Türe erstreckt sich die erste Vertikalseite 41 der Türe 4 entlang der Umfangsrichtung U und ist dem ersten Umfangsträger 21 zugewandt gelegen und die zweite Vertikalseite 42 der Türe 4 erstreckt entlang der Umfangsrichtung U und ist dem zweiten Umfangsträger 22 zugewandt gelegen.

Wie in Fig. 3 beispielhaft und schematisch dargestellt, können an der Türe 4 ein oder mehrere türseitige Anschläge oder Türstopper 51, 52 befestigt sein. Allgemein sind an der Türe 4 eine der Anzahl der Rahmenstopper 31, 32 entsprechende Anzahl von Türstoppern 51, 52 an der Türe 4 vorgesehen, wobei die Türstopper 51, 52 derart an der Türe 4 angeordnet sind, dass im geschlossenen Zustand der Türe 4jeweils ein Türstopper 51, 52 an derselben Position gelegen ist, wie jeweils ein Rahmenstopper 31, 32, so dass jeweils ein Rahmenstopper 31, 32 und ein Türstopper 51, 52 in mechanischen Kontakt treten. An der Türe 4 ist somit zumindest ein an der ersten Vertikalseite 41 angeordneter erster Türstopper 51 und zumindest ein an der der ersten Vertikalseite 41 gegenüberliegenden zweiten Vertikalseite 42 angeordneter zweiter Türstopper 52 vorgesehen. Wie in Fig. 3 rein beispielhaft gezeigt ist, können jeweils zwei obere erste Türstopper 51A an einer ersten Vertikalseite 41 der Türe 4 angeordnet sein, insbesondere in oberen Bereich 41A der ersten Vertikalseite 41, welcher im geschlossenen Zustand der Türe 4 in Bezug auf die Umfangsrichtung U am oberen Bereich 21A der ersten Umfangsstrebe 21 gelegen ist. In gleicher Weise können jeweils zwei untere erste Türstopper (in Fig. 3 nicht dargestellt) an der ersten Vertikalseite 41 der Türe 4 angeordnet sein, insbesondere in einem unteren Bereich der ersten Vertikalseite 41, welcher im geschlossenen Zustand der Türe 4 in Bezug auf die Umfangsrichtung U am unteren Bereich 21B der ersten Umfangsstrebe 21 gelegen ist. Ferner können auch jeweils zwei obere zweite Türstopper 52A an der zweiten Vertikalseite 42 der Türe 4 angeordnet sind, insbesondere in einem oberen Bereich 42A der zweiten Vertikalseite 42, wie dies in Fig. 3 beispielhaft gezeigt ist. Der obere Bereich 42A der zweiten Vertikalseite 42 ist im geschlossenen Zustand der Türe 4 am oberen Bereich 22A der zweiten Umfangsstrebe 22 angeordnet. In gleicher Weise können jeweils zwei untere zweite Türstopper (in Fig. 3 nicht dargestellt) an der zweit Vertikalseite 42 der Türe 4 angeordnet sein, insbesondere in einem unteren Bereich der zweiten Vertikalseite 42, welcher im geschlossenen Zustand der Türe 4 in Bezug auf die Umfangsrichtung U am unteren Bereich 22B der zweiten Umfangsstrebe 22 gelegen ist. Wie in Fig. 3 außerdem beispielhaft gezeigt ist, kann optional ein erster Mitten-Türstopper 51C an der ersten Vertikalseite 41 und diesem gegenüber ein zweiter Mitten-Türstopper 52C an der zweiten Vertikalseite 42 der Türe 4 angeordnet sein. Wie in Fig. 3 weiterhin erkennbar ist, können jeweils ein erster Türstopper 51 und jeweils ein zweiter Türstopper 52 derart angeordnet sein, dass diese im geschlossenen Zustand der Türe 4 in Bezug auf die Umfangsrichtung U auf demselben Niveau angeordnet sind.

In den Fign. 4 und 5 ist beispielhaft ein erster Türstopper 51 im Detail dargestellt. Die zweiten Türstopper 52 sind identisch aufgebaut, weshalb im Folgenden lediglich ein Türstopper 51 beschrieben wird. Wie in den Fign. 4 und 5 beispielhaft dargestellt weist jeder Türstopper 51 einen zweiten Anlageabschnitt 53 auf. Der zweite Anlageabschnitt 53 kann beispielsweise einen scheiben- oder plattenförmigen Bereich 53A und einen sich von diesem aus erstreckenden Bolzen 53B aufweisen, wie dies in Fig. 4 rein beispielhaft und lediglich schematisch gezeigt ist. Der Türstopper 51 kann ferner einen Verbindungsabschnitt 56 aufweisen, welcher einen Basisabschnitt 56A und einen sich quer zu dem Basisabschnitt 56A erstreckenden, beispielsweise plattenförmigen Befestigungsabschnitt 56B aufweist. Wie in Fig. 4 beispielhaft gezeigt, kann der zweite Anlageabschnitt 53 mit dem Verbindungsabschnitt 56 verbunden sein, z.B. indem der Bolzen 53B mit dem Basisabschnitt 56A des Verbindungsabschnitts 56 verschraubt ist, wie dies in Fig. 4 lediglich schematisch dargestellt ist. Der Basisabschnitt 56B des Verbindungsabschnitts 56 des Türstoppers 51 kann mit der Türe 4, z.B. mit einem Teil 40A der Innendrahmenstruktur 40 der Türe 4 verbunden sein, z.B. mit dieser verschraubt, wie dies in Fig. 4 schematisch dargestellt ist.

Wie in den Fign. 4 und 5 weiterhin dargestellt ist, kann der zweite Anlageabschnitt 53 des Türstoppers 51 eine an dem Anlageabschnitt 53, insbesondere an dem plattenförmigen Bereich 53A des Anlageabschnitts 53 ausgebildete zweite Verzahnung 54 aufweisen, welche komplementär zu der ersten Verzahnung 34 des jeweiligen Rahmenstoppers 32 ausgebildet ist. Insbesondere kann die zweite Verzahnung 54 allgemein eine Vielzahl an Eingriffselementen oder Zahnelementen T aufweisen. Wie in Fig. 6 beispielhaft gezeigt, können die Zahnelemente T beispielsweise als eine Vielzahl separater Vorsprünge realisiert sein. In Fig. 6 ist beispielhaft gezeigt, dass die die Zahnelemente T bildenden Vorsprünge tetraederförmig bzw. in der Form von Tetraederstümpfen realisiert sein können. In die sich zwischen den Vorsprüngen T ergebende Vertiefungen können die Zahnelemente T der ersten Verzahnung 34 eingreifen.

Wie in den Fign. 4 und 5 weiterhin beispielhaft gezeigt ist, kann der zweite Anlageabschnitt 53 des Türstoppers 51 optional eine zweite Eingriffsstruktur 55 aufweisen. Die zweite Eingriffsstruktur 55 kann beispielsweise wie in den Fign. 4 und 5 gezeigt als Vorsprung realisiert sein, welcher insbesondere konisch ausgebildet sein kann. Alternativ kann die zweite Eingriffsstruktur 55 auch als Vertiefung realisiert sein. Allgemein ist die zweite Eingriffsstruktur 55 komplementär zu der ersten Eingriffsstruktur 35 des Rahmenstoppers 31 ausgebildet. Die zweite Eingriffsstruktur 55 kann beispielsweise konzentrisch bzw. Innerhalb der zweiten Verzahnung 54 angeordnet sein, wie dies in den Fign. 4 und 5 rein beispielhaft gezeigt ist. Wie in Fig. 5 weiterhin dargestellt ist, kann die zweite Eingriffsstruktur eine Eingriffstiefe t55 aufweisen, welche größer ist als eine Eingriffstiefe t54 der zweiten Verzahnung 54. Im Beispiel von Fig. 5 bedeutet dies, dass die Erhöhung über die Zahnelemente T der zweiten Verzahnung 54 vorsteht.

Wie bereits oben erwähnt, sind die Türstopper 51, 52 derart an der Türe 4 angeordnet, dass diese im geschlossenen Zustand der Türe 4 an zu den Positionen der Rahmenstopper 31, 32 korrespondierenden Positionen angeordnet sind. Im geschlossenen Zustand der Türe 4 greifen daher die erste Verzahnung 34jeweils eines Rahmenstoppers 31, 32 und die zweite Verzahnung 54 jeweils eines Türstoppers 51, 52 ineinander ein, wie dies in Fig. 4 schematisch dargestellt ist. Wie in Fig. 4 außerdem gezeigt ist, greifen im geschlossenen Zustand der Türe 4 die erste und die zweite Eingriffsstruktur 35, 55 ineinander ein. Durch die an den Stoppern 31, 51 vorgesehenen Verzahnungen 34, 54 wird im geschlossenen Zustand der Türe 4 in Bezug auf die Umfangsrichtung U und die Längsrichtung L ein Formschluss zwischen den Stoppern 31, 51 erzielt. Dadurch können in der Längsrichtung L und in der Umfangsrichtung U wirkende Kräfte vom Türrahmen 2 in die Türe 4 eingeleitet werden und umgekehrt. Aufgrund der Anordnung der Stopper 31, 51 an gegenüberliegenden Seiten der Türe 4 bzw. des Türrahmens 2 kann die Türe 4 folglich als lasttragendes Bauteil dienen.

Wie in Fig. 5 beispielhaft dargestellt ist, können selbst dann noch in der Längsrichtung L und in der Umfangsrichtung U wirkende Kräfte vom Türrahmen 2 in die Türe 4 eingeleitet werden und umgekehrt, wenn die Verzahnungen 34, 54 nicht mit der vollen Eingriffstiefe t34, t54 ineinander eingreifen. Dieser Effekt wird durch die optionalen ersten und zweiten Eingriffsstrukturen 35, 55 weiter verbessert.

Die in Fig. 3 beispielhaft gezeigten optionale ersten und zweiten Mitten-Türstopper 51C, 52C können in gleicher Weise realisiert sein, wie dies oben für die übrigen Türstopper 51 beschrieben wurde. Optional kann auch vorgesehen sein, dass die Anlageabschnitte 53 der Mitten-Türstopper 51C, 52C eben ausgebildet ist, das heißt ohne erste Verzahnung 54 und optional auch ohne zweite Eingriffsstruktur 55.

Um die in die Türe 4 eingeleiteten mechanischen Kräfte noch besser zwischen einem ersten Türstopper 51 und einem zweiten Türstopper 52 übertragen zu können, kann die Türe 4 eine optionale eine Innenversteifungsstruktur 43 aufweisen. Wie in Fig. 3 rein beispielhaft dargestellt ist, kann die Innenversteifungsstruktur 43 beispielsweise eine oder mehrere Innenlängsstreben 44 aufweisen, wobei sich eine Innenlängsstrebe 44 jeweils zwischen zwei einander gegenüberliegenden, insbesondere zwischen im geschlossenen Zustand der Türe 4 in Bezug auf die Umfangsrichtung U auf demselben Niveau liegenden ersten und zweiten Türstoppern 51, 52 erstreckt. Beispielsweise kann eine sich zwischen zwei einander gegenüberliegenden oberen ersten Türstoppern 51A und oberen zweiten Türstoppern 52A erstreckende erste Innenlängsstrebe 44A und eine sich zwischen den zwei weiteren einander gegenüberliegenden oberen ersten Türstoppern 51A und oberen zweiten Türstoppern 51A, 52A erstreckende zweite Innenlängsstrebe 44B vorgesehen sein, wie dies in Fig. 3 beispielhaft dargestellt ist. Die erste Innenlängsstrebe 44A erstreckt sich hierbei zwischen den beiden oberen der oberen ersten und zweiten Türstopper 51A, 52A und ist somit näher an einem oberen Ende oder einer oberen Seite der Türe 4 angeordnet als die zweite Innenlängsstrebe 44B, welche sich zwischen den beiden unteren der oberen ersten und zweiten Türstopper 51A, 52A erstreckt. Optional kann auch eine sich zwischen den Mitten-Türstoppern 51C, 52C erstreckende weitere Innenlängsstrebe 44C vorgesehen sein.

Optional kann die Innenversteifungsstruktur 43 eine zentrale Türumfangsstrebe 46 aufweisen, welche mittig zwischen der ersten und der zweiten Vertikalseite 41, 42 der Türe 4 angeordnet ist und sich vorzugweise parallel zu den Vertikalseiten 41, 42 der Türe 4 erstreckt. Die zentrale Türumfangsstrebe 46 kann beispielsweise mit der optionalen Längsstrebe 44C verbunden sein und beabstandet zu der zweiten Längsstrebe 44B enden. Auch ist denkbar, dass die zentrale Türumfangsstrebe 46 an der zweiten Längsstrebe 44B endet und mit dieser verbunden ist.

Ebenfalls optional kann die Innenversteifungsstruktur 43 eine erste Diagonalversteifungsstrebe 45A und eine zweite Diagonalversteifungsstrebe 45B aufweisen. Die erste Diagonalversteifungsstrebe 45A kann sich insbesondere zwischen einem an dem ersten Türstopper 51A gelegenen ersten Endbereich 44E der ersten Innenlängsstrebe 44A und der zweiten Innenlängsstrebe 44B erstrecken.

Wie dies in Fig. 3 beispielhaft dargestellt ist, kann die erste Diagonalversteifungsstrebe 45A sich insbesondere von dem ersten Endbereich 44E der ersten Innenlängsstrebe 44A in Richtung eines Mittenbereichs der zweiten Innenlängsstrebe 44B erstrecken. Optional erstreckt sich die erste Diagonalversteifungsstrebe 45A über die zweite Innenlängsstrebe 44B hinaus und kann insbesondere an der zentralen Türumfangsstrebe 46 enden bzw. mit dieser verbunden sein, wie dies in Fig. 3 beispielhaft dargestellt ist. Die zweite Diagonalversteifungsstrebe 45B kann sich in ähnlicher Weise von dem zweiten Endbereich 44F der ersten Innenlängsstrebe 44A in Richtung des Mittenbereichs der zweiten Innenlängsstrebe 44B erstrecken. Damit ergibt sich jeweils ein diagonaler Verlauf der ersten und der zweiten Diagonalversteifungsstrebe 45A, 45B zwischen der ersten und der zweiten Innenlängsstrebe 44A, 44B. Optional kann sich auch die zweite Diagonalversteifungsstrebe 45B über die zweite Innenlängsstrebe 44B hinaus erstrecken und kann insbesondere an der zentralen Türumfangsstrebe 46 enden bzw. mit dieser verbunden sein, wie dies in Fig. 3 beispielhaft dargestellt ist. Wie in Fig. 3 weiterhin beispielhaft dargestellt ist, können die erste und die zweite Diagonalversteifungsstrebe 45A, 45B jeweils bogenförmig oder gekrümmt verlaufen, wobei erste Diagonalversteifungsstrebe 45A von der ersten Vertikalseite 41 der Türe 4 aus gesehen konkav gekrümmt verläuft und die zweite Diagonalversteifungsstrebe 45B von der zweiten Vertikalseite 42 der Türe 4 aus gesehen konkav gekrümmt verläuft.

Wie in Fig. 3 weiterhin beispielhaft gezeigt ist, kann die Innenversteifungsstruktur 43 optional seitliche Türumfangsstreben 47A, 47B aufweisen, welche sich in den Endbereichen 44E, 44F zwischen der ersten und der zweiten Innenlängsstrebe 44A, 44B erstrecken. Alternativ oder zusätzlich können weiterhin optionale Zusatz-Diagonalversteifungsstreben 49A, 49B vorgesehen sein, welche sich jeweils von den Endbereichen der zweiten Innenlängsstrebe 44B aus zu der optionalen weiteren Längsstrebe 44C hin erstrecken und mit dieser verbunden sind. Die Zusatz-Diagonalversteifungsstreben 49A, 49B können insbesondere zumindest abschnittsweise einen bogenförmigen oder gekrümmten Verlauf aufweisen, wobei die Zusatz-Diagonalversteifungsstreben 49A, 49B insbesondere im Wesentlichen parallel zu den Diagonalversteifungsstreben 45A, 45B und der zentralen Umfangsstrebe 46 verlaufen können, wie dies in Fig. 3 schematisch dargestellt ist.

In Fig. 3 ist lediglich ein oberer Abschnitt einer Türe 4 dargestellt, welcher im geschlossenen Zustand der Türe 4 in Bezug auf die Umfangsrichtung U der optionalen oberen Längsstrebe 23 des Rahmens 2 zugewandt gelegen ist. In einem in Fig. 3 nicht dargestellten unteren Abschnitt der Türe 4, welcher im geschlossenen Zustand der Türe 4 in Bezug auf die Umfangsrichtung U der optionalen unteren Längsstrebe 24 des Rahmens 2 zugewandt gelegen ist, kann die Innenversteifungsstruktur 43 in gleicher Weise realisiert sein wie in dem in Fig. 4 gezeigten oberen Abschnitt bzw. wie oben beschrieben. Sämtliche Streben der Innenversteifungsstruktur 43 können als Metallprofile oder als Profile aus Faserverbundmaterial, wie z.B. Kohlefaserverstärktem Kunststoff, realisiert sein. Beispielsweise können die Streben der Innenversteifungsstruktur 43 einen T-förmigen, H-förmigen, Ω-förmigen oder ähnlichen Querschnitt aufweisen.

Das oben beschriebene Türsystem 1 kann in einem Luftfahrzeug 100 insbesondere als Passagiereingang eingesetzt werden. Durch die an den Türstoppern 51, 52 und den Rahmenstoppern 31, 32 vorgesehenen, im geschlossenen Zustand ineinandergreifenden Verzahnungen 54, 34 wird eine Kraftübertragung zwischen Rahmen 2 und Türe 4 über eine Vielzahl von Zahnelementen T ermöglicht. Da jedes einzelne Zahnelement T nur eine relativ geringe mechanische Last aufnehmen muss

Obwohl die vorliegende Erfindung vorstehend anhand von Ausführungsbeispielen exemplarisch erläutert wurde, ist sie darauf nicht beschränkt, sondern auf vielfältige Weise im Rahmen der Ansprüche modifizierbar.

### BEZUGSZEICHENLISTE

- 1: Türsystem
- 2: Türrahmen
- 4: Türe

- 20: Türöffnung
- 21: erste Umfangsstrebe
- 21A: oberer Bereich der ersten Umfangsstrebe
- 21B: unterer Bereich der ersten Umfangsstrebe
- 22: zweite Umfangsstrebe
- 22A: oberer Bereich der zweiten Umfangsstrebe
- 22B: unterer Bereich der zweiten Umfangsstrebe
- 23: Längsstrebe
- 23A: erste Verbindungsstelle
- 23B: zweite Verbindungsstelle
- 25: Versteifungsträger
- 25A: gewinkelter Abschnitt des Versteifungsträgers
- 25B, C: Diagonalabschnitte des Versteifungsträgers
- 26: Längsverbindungsstücke
- 31: erster Rahmenstopper
- 31A: obere erste Rahmenstopper
- 31B: untere erste Rahmenstopper
- 31C: erster Mitten-Rahmenstopper
- 32: zweiter Rahmenstopper
- 32A: obere zweite Rahmenstopper
- 32B: untere zweite Rahmenstopper
- 32C: zweiter Mitten-Rahmenstopper
- 33: erster Anlageabschnitt der Rahmenstopper
- 33i: Innenfläche des ersten Anlageabschnitts
- 34: erste Verzahnung
- 35: erste Eingriffsstruktur
- 36: Befestigungsabschnitt
- 36A: Verbindungseinrichtungen
- 40: Innenrahmenstruktur der Türe
- 40A: Teil der Innenrahmenstruktur
- 41: erste Vertikalseite der Türe
- 42: zweite Vertikalseite der Türe
- 43: Innenversteifungsstruktur
- 44: Innenlängsstrebe
- 44A: erste Innenlängsstrebe
- 44B: zweite Innenlängsstrebe
- 44C: weitere Innenlängsstrebe
- 44E: erster Endbereich der ersten Innenlängsstrebe
- 44F: zweiter Endbereich der ersten Innenlängsstrebe
- 45A: erste Diagonalversteifungsstrebe
- 45B: zweite Diagonalversteifungsstrebe
- 46: zentrale Türumfangsstrebe
- 47A, 47B: seitliche Türumfangsstreben
- 48: Verkleidung
- 49A, 49B: Zusatz-Diagonalversteifungsstreben
- 51: erster Türstopper
- 51A: oberer erster Türstopper
- 51C: erster Mitten-Türstopper
- 52: zweiter Türstopper
- 52A: oberer zweiter Türstopper
- 52C: zweiter Mitten-Türstopper
- 53: zweiter Anlageabschnitt
- 53A: plattenförmige Bereich
- 53B: Bolzen
- 54: zweite Verzahnung
- 55: zweite Eingriffsstruktur
- 56: Verbindungsabschnitt des Türstoppers

- 100: Luftfahrzeug
- 101: Rumpf
- 110: Trägerstruktur
- 120: Türöffnung
- 130: Frachtöffnung
- 140: Frachttor
- I101: Innenraum
- KS: Koordinatensystem
- L: Längsrichtung
- L101: Rumpflängsachse
- R: radiale Richtung
- t34: Eingriffstiefe der ersten Verzahnung
- t35: Eingriffstiefe der ersten Eingriffsstruktur
- t54: Eingriffstiefe der zweiten Verzahnung
- t55: Eingriffstiefe der zweiten Eingriffsstruktur
- U: Umfangsrichtung

## Patentansprüche

1. Türsystem (1) für ein Luftfahrzeug (100), mit
einem eine Türöffnung (20) definierenden Türrahmen (2) mit einer sich in einer Umfangsrichtung (U) erstreckenden ersten Umfangsstrebe (21) und einer sich in der Umfangsrichtung (U) erstreckenden zweiten Umfangsstrebe (22), welche in Bezug auf eine quer zu der Umfangsrichtung (U) verlaufende Längsrichtung (L) beabstandet zu der ersten Umfangsstrebe (21) angeordnet ist;
zumindest einem an der ersten Umfangsstrebe (21) befestigten ersten Rahmenstopper (31) und zumindest einem an der zweiten Umfangsstrebe (22) befestigtem zweiten Rahmenstopper (32), wobei die Rahmenstopper (31; 32) jeweils einen in die Türöffnung (20) hineinragenden ersten Anlageabschnitt (33) mit einer ersten Verzahnung (34) aufweisen, wobei die ersten Verzahnungen (34) jeweils an einer Innenfläche (33i) des ersten Anlageabschnitts (33) ausgebildet sind, welche sich senkrecht zu einer quer zu der Längsrichtung (L) und quer zu der Umfangsrichtung (U) verlaufenden radialen Richtung (R) erstreckt;
einer relativ zu dem Türrahmen (2) bewegbar gelagerten Türe (4), welche in einem geschlossenen Zustand in der Türöffnung (20) angeordnet ist; und
einer der Anzahl der Rahmenstopper (31; 32) entsprechenden Anzahl von an gegenüberliegenden Seiten (41; 42) der Türe (4) angeordneten und mit der Türe (4) verbundenen Türstoppern (51; 52), welche jeweils einen zweiten Anlageabschnitt (53) aufweisen, wobei der zweite Anlageabschnitt (53) eine komplementär zu der ersten Verzahnung (34) ausgebildete zweite Verzahnung (54) aufweist, und wobei die erste Verzahnung (34) jeweils eines Rahmenstoppers (31; 32) und die zweite Verzahnung (54) jeweils eines Türstoppers (51; 52) im geschlossenen Zustand der Türe (4) ineinander eingreifen;
wobei die erste Verzahnung (34) und die zweite Verzahnung (54) eine Vielzahl an Eingriffselementen oder Zahnelementen aufweist.

2. Türsystem (1) nach Anspruch 1, wobei der erste und der zweite Rahmenstopper (31; 32) in Bezug auf die Umfangsrichtung (U) auf demselben Niveau angeordnet sind.

3. Türsystem (1) nach Anspruch 1 oder 2, wobei jeweils zwei obere erste Rahmenstopper (31A) in einem in Bezug auf die Umfangsrichtung (U) oberen Bereich (21A) der ersten Umfangsstrebe (21) angeordnet sind, und wobei jeweils zwei obere zweite Rahmenstopper (32A) in einem in Bezug auf die Umfangsrichtung (U) oberen Bereich (22A) der zweiten Umfangsstrebe (22) angeordnet sind.

4. Türsystem (1) nach einem der voranstehenden Ansprüche, wobei jeweils zwei untere erste Rahmenstopper (31B) in einem in Bezug auf die Umfangsrichtung (U) unteren Bereich (21B) der ersten Umfangsstrebe (21) angeordnet sind, und wobei jeweils zwei untere zweite Rahmenstopper (32B) in einem in Bezug auf die Umfangsrichtung (U) unteren Bereich (22B) der zweiten Umfangsstrebe (22) angeordnet sind.

5. Türsystem (1) nach einem der voranstehenden Ansprüche, wobei der Türrahmen (2) eine sich zwischen der ersten und der zweiten Umfangsstrebe (22) in der Längsrichtung (L) erstreckende Längsstrebe (23) und einen Versteifungsträger (25) aufweist, welcher sich zumindest abschnittsweise bogenförmig zwischen einer ersten Verbindungsstelle (23A), an welcher die Längsstrebe (23) mit der ersten Umfangsstrebe (21) verbunden ist, und einer zweiten Verbindungsstelle (23B) erstreckt, an welcher die Längsstrebe (23) mit der zweiten Umfangsstrebe (22) verbunden ist.

6. Türsystem (1) nach Anspruch 5, wobei sich der Versteifungsträger (25) jeweils über die erste und die zweite Verbindungsstelle (23A; 23B) hinaus erstreckt und mittels Längsverbindungsstücken (26) mit der ersten und der zweiten Umfangsstrebe (21; 22) verbunden ist.

7. Türsystem (1) nach einem der voranstehenden Ansprüche, wobei die Türe (4) eine Innenversteifungsstruktur (43) aufweist, welche zumindest eine Innenlängsstrebe (44) umfasst, die sich zwischen den auf gegenüberliegenden Seiten (41; 42) der Türe angeordneten Türstoppern (51; 52) erstreckt.

8. Türsystem (1) nach Anspruch 7, wobei jeweils zwei erste Türstopper (51A) an einer ersten Vertikalseite (41) der Türe (4) angeordnet sind, vorzugsweise in einem in Bezug auf die Umfangsrichtung (U) oberen Bereich (41A) und/oder unteren Bereich der ersten Vertikalseite (41), wobei jeweils zwei zweite Türstopper (52A) auf einer zweiten Vertikalseite (42) der Türe (4) angeordnet sind, vorzugsweise in einem in Bezug auf die Umfangsrichtung (U) oberen Bereich (42A) und/oder unteren Bereich der zweiten Vertikalseite (42), wobei die Innenversteifungsstruktur (44) eine sich zwischen zwei einander gegenüberliegenden ersten und zweiten Türstoppern (51A; 52A) erstreckende erste Innenlängsstrebe (44A) und eine sich zwischen den zwei weiteren einander gegenüberliegenden ersten und zweiten Türstoppern (51A; 52A) erstreckende zweite Innenlängsstrebe (44B) aufweist, und wobei die Innenversteifungsstruktur (43) eine erste Diagonalversteifungsstrebe (45A), die sich diagonal zwischen einem an dem ersten Türstopper (51A) gelegenen ersten Endbereich (44E) der ersten Innenlängsstrebe (44A) und der zweiten Innenlängsstrebe (44B) erstreckt, und eine zweite Diagonalversteifungsstrebe (45B) aufweist, die sich diagonal zwischen einem an dem zweiten Türstopper (52A) gelegenen zweiten Endbereich (44F) der ersten Innenlängsstrebe (44A) und der zweiten Innenlängsstrebe (44B) erstreckt.

9. Türsystem (1) nach Anspruch 8, wobei die erste und die zweite Diagonalversteifungsstrebe (45A; 45B) jeweils bogenförmig verlaufen.

10. Türsystem (1) nach Anspruch 8 oder 9, wobei die erste und die zweite Diagonalversteifungsstrebe (45A; 45B) sich jeweils über die zweite Innenlängsstrebe (44B) hinaus erstrecken und an einer zentralen Türumfangsstrebe (46) enden.

11. Türsystem (1) nach einem der voranstehenden Ansprüche, wobei die ersten Anlageabschnitte (33) der Rahmenstopper (31; 32) eine vorzugsweise konzentrisch zu der jeweiligen ersten Verzahnung (34) angeordnete erste Eingriffsstruktur (35) aufweisen, welche eine größere Eingriffstiefe (t35) als die jeweilige erste Verzahnung (34) aufweist, und wobei die zweiten Anlageabschnitte (53) der Türstopper (51; 52) eine vorzugsweise konzentrisch zu der jeweiligen zweiten Verzahnung (54) angeordnete, komplementär zu der ersten Eingriffsstruktur (35) ausgebildete zweite Eingriffsstruktur (55) aufweisen, welche eine größere Eingriffstiefe (t55) als die jeweilige erste Verzahnung (54) aufweist.

12. Türsystem (1) nach Anspruch 11, wobei die erste Eingriffsstruktur (35) als vorzugsweise konische Vertiefung und die zweite Eingriffsstruktur (55) als vorzugsweise konischer Vorsprung ausgebildet ist oder die erste Eingriffsstruktur (35) als vorzugsweise konischer Vorsprung und die zweite Eingriffsstruktur (55) als vorzugsweise konische Vertiefung ausgebildet ist.

13. Türsystem (1) nach einem der voranstehenden Ansprüche, wobei die erste Verzahnung (34) und/oder die zweite Verzahnung (54) eine Vielzahl separater, tetraederförmiger Vorsprünge (T) aufweist.

14. Luftfahrzeug (100), mit:
einem sich entlang einer Rumpflängsachse (L101) erstreckenden Rumpf (101), welcher einen Innenraum definiert; und
einem Türsystem (1) nach einem der voranstehenden Ansprüche;
wobei der Türrahmen (2) des Türsystems (1) derart mit dem Rumpf (101) verbunden ist, dass sich die Längsrichtung (L) entlang und die radiale Richtung (R) senkrecht zu der Rumpflängsachse (L101) erstreckt.

15. Luftfahrzeug (100) nach Anspruch 14, wobei das Türsystem (1) einen Zugang zu einem im Innenraum des Rumpfs (101) gelegenen Passagierbereich ermöglicht.

## Claims

1. Door system (1) for an aircraft (100), having
a door frame (2) defining a door opening (20) and having a first circumferential strut (21) extending in a circumferential direction (U) and a second circumferential strut (22) extending in the circumferential direction (U) and arranged at a distance from the first circumferential strut (21) with respect to a longitudinal direction (L) extending transversely to the circumferential direction (U);
at least one first frame stopper (31) fixed to the first circumferential strut (21) and at least one second frame stopper (32) fixed to the second circumferential strut (22), the frame stoppers (31; 32) each have a first abutment section (33) projecting into the door opening (20) and having a first toothing (34), the first toothings (34) each being formed at an inner surface (33i) of the first abutment section (33), which inner surface (33i) extends perpendicularly to a radial direction (R) extending transversely to the longitudinal direction (L) and transversely to the circumferential direction (U);
a door (4) movably mounted relative to the door frame (2) and arranged in a closed state in the door opening (20); and
a number of door stoppers (51; 52) corresponding to the number of the frame stoppers (31; 32) which door stoppers (51; 52) are arranged on opposite sides (41; 42) of the door (4) and are connected to the door (4) and which each have a second abutment section (53), wherein the second abutment section (53) has a second toothing (54) formed complementarily to the first toothing (34), and wherein the first toothing (34) of a respective frame stopper (31; 32) and the second toothing (54) of a respective door stopper (51; 52) engage in one another in the closed state of the door (4);
wherein the first toothing (34) and the second toothing (54) have a plurality of engagement elements or toothed elements.

2. Door system (1) according to claim 1, wherein the first and the second frame stoppers (31; 32) are arranged at the same level with respect to the circumferential direction (U).

3. Door system (1) according to claim 1 or 2, wherein two upper first frame stoppers (31A) are respectively arranged in an upper portion (21A) of the first circumferential strut (21) with respect to the circumferential direction (U), and wherein two upper second frame stoppers (32A) are respectively arranged in an upper portion (22A) of the second circumferential strut (22) with respect to the circumferential direction (U).

4. Door system (1) according to one of the preceding claims, wherein two lower first frame stoppers (31B) are arranged in a lower portion (21B) of the first circumferential strut (21) with respect to the circumferential direction (U), respectively, and wherein two lower second frame stoppers (32B) are arranged in a lower portion (22B) of the second circumferential strut (22) with respect to the circumferential direction (U), respectively.

5. Door system (1) according to one of the preceding claims, wherein the door frame (2) comprises a longitudinal strut (23) extending between the first and the second circumferential strut (22) in the longitudinal direction (L), and a stiffening support (25) which extends at least in sections in an arcuate manner between a first junction (23A), at which the longitudinal strut (23) is connected to the first circumferential strut (21), and a second junction (23B), at which the longitudinal strut (23) is connected to the second circumferential strut (22).

6. Door system (1) of claim 5, wherein the stiffener support (25) extends beyond each of the first and second junctions (23A; 23B) and is connected to the first and second circumferential struts (21; 22) by means of longitudinal connectors (26).

7. Door system (1) according to any one of the preceding claims, wherein said door (4) has an internal stiffening structure (43) comprising at least one internal longitudinal strut (44) extending between door stoppers (51; 52) arranged on opposite sides (41; 42) of said door.

8. Door system (1) according to claim 7, wherein in each case two first door stoppers (51A) are arranged on a first vertical side (41) of the door (4), preferably in an upper portion (41A) and/or lower portion of the first vertical side (41) with respect to the circumferential direction (U), wherein two second door stoppers (52A) each are arranged on a second vertical side (42) of the door (4), preferably in an upper portion (42A) and/or lower portion of the second vertical side (42) with respect to the circumferential direction (U), wherein the internal stiffening structure (44) comprises a first internal longitudinal strut (44A) extending between two mutually opposing first and second door stoppers (51A; 52A) and a second internal longitudinal strut (44B) extending between the two further opposing first and second door stoppers (51A; 52A), and wherein the internal stiffening structure (43) comprises a first diagonal stiffening strut (45A) extending diagonally between a first end portion (44E) located at the first door stopper (51A) of the first internal longitudinal strut (44A) and the second internal longitudinal strut (44B) and a second diagonal stiffening strut (45B) extending diagonally between a second end portion (44F) located at the second door stoppers (52A) of the first internal longitudinal strut (44A) and the second internal longitudinal strut (44B).

9. Door system (1) according to claim 8, wherein the first and the second diagonal stiffening struts (45A; 45B) each extend in an arcuate manner.

10. Door system (1) according to claim 8 or 9, wherein the first and second diagonal stiffening struts (45A; 45B) each extend beyond the second internal longitudinal strut (44B) and terminate at a central door circumferential strut (46).

11. Door system (1) according to one of the preceding claims, wherein the first abutment sections (33) of the frame stoppers (31; 32) have a first engagement structure (35) which is preferably arranged concentrically to the respective first toothing (34) and which has a greater depth of engagement (t35) than the respective first toothing (34), and wherein the second abutment sections (53) of the door stoppers (51; 52) have a second engagement structure (55) which is preferably arranged concentrically to the respective second toothing (54) and is formed complementarily to the first engagement structure (35) and has a greater depth of engagement (t55) than the respective first toothing (54).

12. Door system (1) according to claim 11, wherein the first engagement structure (35) is formed as a preferably conical recess and the second engagement structure (55) is formed as a preferably conical protrusion, or the first engagement structure (35) is formed as a preferably conical protrusion and the second engagement structure (55) is formed as a preferably conical recess.

13. Door system (1) according to any one of the preceding claims, wherein the first toothing (34) and/or the second toothing (54) comprises a plurality of separate, tetrahedron-shaped protrusions (T).

14. Aircraft (100), having:
a fuselage (101) extending along a longitudinal fuselage axis (L101) and defining an interior space; and
a door system (1) according to any one of the preceding claims;
wherein the door frame (2) of the door system (1) is connected to the fuselage (101) such that the longitudinal direction (L) extends along and the radial direction (R) is perpendicular to the fuselage longitudinal axis (L101).

15. Aircraft (100) according to claim 14, wherein the door system (1) provides access to a passenger area located in the interior of the fuselage (101).

## Revendications

1. Système de porte (1) pour un aéronef (100), comprenant
un cadre de porte (2) définissant une ouverture de porte (20), comprenant un premier entretoise périphérique (21) s'étendant dans une direction circonférentielle (U) et un deuxième entretoise périphérique (22) s'étendant dans la direction circonférentielle (U), qui est disposé à distance du premier entretoise périphérique (21) par rapport à une direction longitudinale (L) s'étendant transversalement à la direction circonférentielle (U);
au moins un premier arrêt de cadre (31) fixé au premier entretoise périphérique (21) et au moins un deuxième arrêt de cadre (32) fixé au deuxième entretoise périphérique (22), dans lequel les arrêts de cadre (31; 32) présentent chacun une première section d'appui (33) faisant saillie dans l'ouverture de porte (20) et comportant une première denture (34), dans lequel les premières dentures (34) étant formées chacune sur une surface intérieure (33i) de la première section d'appui (33), qui s'étend perpendiculairement à une direction radiale (R) s'étendant transversalement à la direction longitudinale (L) et transversalement à la direction circonférentielle (U);
une porte (4) montée de manière mobile relativement au cadre de porte (2), qui est disposée dans l'ouverture de porte (20) dans un état fermé; et
d'un nombre de arrêt de porte (51; 52) correspondant au nombre de arrêt de cadre (31; 32), disposés sur des côtés opposés (41; 42) de la porte (4) et reliés à la porte (4), qui présentent chacun une deuxième section d'appui (53), dans lequel la deuxième section d'appui (53) présentant une deuxième denture (54) complémentaire à la première denture (34), et dans lequel la première denture (34) de chaque arrêt de cadre (31; 32) et la deuxième denture (54) de chaque arrêt de porte (51; 52) s'engrenant l'une dans l'autre lorsque la porte (4) est fermée;
dans lequel la première denture (34) et la deuxième denture (54) présentant une pluralité d'éléments d'engrènement ou d'éléments dentés.

2. Système de porte (1) selon la revendication 1, dans lequel le premier et le deuxième arrêt de cadre (31; 32) sont disposés au même niveau par rapport à la direction circonférentielle (U).

3. Système de porte (1) selon la revendication 1 ou 2, dans lequel deux premiers arrêts de cadre supérieurs (31A) sont respectivement disposés dans une région supérieure (21A) de la premier entretoise périphérique (21) par rapport à la direction circonférentielle (U), et dans lequel deux deuxièmes arrêts de cadre supérieurs (32A) sont respectivement disposés dans une région supérieure (22A) de la deuxième entretoise périphérique (22) par rapport à la direction circonférentielle (U).

4. Système de porte (1) selon l'une des revendications précédentes, dans lequel deux premiers arrêts de cadre inférieurs (31B) sont respectivement disposés dans une région inférieure (21B) de la premier entretoise périphérique (21) par rapport à la direction circonférentielle (U), et dans lequel deux deuxièmes arrêts de cadre inférieurs (32B) sont respectivement disposés dans une région inférieure (22B) de la deuxième entretoise périphérique (22) par rapport à la direction circonférentielle (U).

5. Système de porte (1) selon l'une des revendications précédentes, dans lequel le cadre de porte (2) comprend une entretoise longitudinale (23) s'étendant dans la direction longitudinale (L) entre la première et la deuxième entretoise périphérique (22), et un élément de renfort (25) qui s'étend au moins en partie en forme d'arc entre un premier point de jonction (23A), auquel l'entretoise longitudinale (23) est reliée à la premier entretoise périphérique (21), et un deuxième point de jonction (23B), auquel l'entretoise longitudinale (23) est reliée à la deuxième entretoise périphérique (22).

6. Système de porte (1) selon la revendication 5, dans lequel le élément de renfort (25) s'étend au-delà de chacun des premier et deuxième points de jonction (23A; 23B) et est reliée aux première et deuxième entretoise périphérique (21; 22) au moyen de pièces de jonction longitudinales (26).

7. Système de porte (1) selon l'une des revendications précédentes, dans lequel la porte (4) comprend une structure de renfort interne (43) qui comprend au moins une entretoise longitudinale intérieure (44) qui s'étend entre les arrêts de porte (51; 52) disposés sur des côtés opposés (41; 42) de la porte.

8. Système de porte (1) selon la revendication 7, dans lequel deux premiers arrêts de porte (51A) sont respectivement disposés sur un premier côté vertical (41) de la porte (4), de préférence dans une région supérieure (41A) et/ou une région inférieure du premier côté vertical (41) par rapport à la direction circonférentielle (U), dans lequel deux deuxièmes arrêts de porte (52A) étant respectivement disposés sur un deuxième côté vertical (42) de la porte (4), de préférence dans une région supérieure (42A) et/ou une région inférieure du deuxième côté vertical (42) par rapport à la direction circonférentielle (U), dans lequel la structure de renfort interne (44) comprenant une première entretoise longitudinale intérieure (44A) s'étendant entre deux premiers et deuxièmes arrêts de porte opposés (51A; 52A) et une deuxième entretoise longitudinale intérieure (44B) s'étendant entre les deux autres premier et deuxième arrêts de porte opposés (51A; 52A), et dans lequel la structure de renfort interne (43) comprend une première entretoise de renfort diagonale (45A), s'étendant en diagonale entre une première région d'extrémité (44E) de la première entretoise longitudinale intérieure (44A) située au niveau du premier arrêt de porte (51A) et la deuxième entretoise longitudinale intérieure (44B), et une deuxième entretoise de renfort diagonale (45B) s'étendant en diagonale entre une deuxième région d'extrémité (44F) de la première entretoise longitudinale intérieure (44A) située au niveau du deuxième arrêt de porte (52A) et la deuxième entretoise longitudinale intérieure (44B).

9. Système de porte (1) selon la revendication 8, dans lequel la première et la deuxième entretoises de renfort diagonales (45A; 45B) s'étendent chacune en forme d'arc.

10. Système de porte (1) selon la revendication 8 ou 9, dans lequel les première et deuxième entretoises de renfort diagonales (45A; 45B) s'étendent chacune au-delà de la deuxième entretoise longitudinale intérieure (44B) et se terminent au niveau d'une entretoise périphérique centrale de porte (46).

11. Système de porte (1) selon l'une des revendications précédentes, dans lequel les premières sections d'appui (33) des arrêts de cadre (31; 32) présentent une première structure d'engrènement (35) disposée de préférence concentriquement à la première denture respective (34), qui présente une profondeur d'engrènement (t35) plus grande que la première denture respective (34), et dans lequel les deuxièmes sections d'appui (53) des arrêts de porte (51; 52) présentent une deuxième structure d'engrènement (55) disposée de préférence concentriquement à la deuxième denture (54) respective et réalisée de manière complémentaire à la première structure d'engrènement (35), laquelle présente une profondeur d'engrènement (t55) plus grande que la première denture (54) respective.

12. Système de porte (1) selon la revendication 11, dans lequel la première structure d'engrènement (35) est réalisée sous la forme d'un renfoncement de préférence conique et la deuxième structure d'engrènement (55) est réalisée sous la forme d'une saillie de préférence conique, ou la première structure d'engrènement (35) est réalisée sous la forme d'une saillie de préférence conique et la deuxième structure d'engrènement (55) est réalisée sous la forme d'un renfoncement de préférence conique.

13. Système de porte (1) selon l'une des revendications précédentes, dans lequel la première denture (34) et/ou la deuxième denture (54) comporte une pluralité de saillies (T) séparées en forme de tétraèdre

14. Aéronef (100), comprenant :
un fuselage (101) s'étendant le long d'un axe longitudinal de fuselage (L101) et définissant un espace intérieur; et
un système de porte (1) selon l'une des revendications précédentes;
dans lequel le cadre de porte (2) du système de porte (1) est relié à le fuselage (101) de telle sorte que la direction longitudinale (L) s'étend le long de l'axe longitudinal de fuselage (L101) et que la direction radiale (R) s'étend perpendiculairement à cet axe.

15. Aéronef (100) selon la revendication 14, dans lequel le système de porte (1) permet d'accéder à une zone de passagers située à l'intérieur du fuselage (101).
